(19) <img> Europäisches Patentamt / European Patent Office / Office européen des brevets

(11) **EP 4 270 540 A1**

(12) **EUROPEAN PATENT APPLICATION**
published in accordance with Art. 153(4) EPC

(43) Date of publication:
**01.11.2023 Bulletin 2023/44**

(21) Application number: **20967315.1**

(22) Date of filing: **28.12.2020**

(51) International Patent Classification (IPC):
*H01M 4/38* (2006.01)    *H01M 4/587* (2010.01)

(52) Cooperative Patent Classification (CPC):
**H01M 4/38; H01M 4/587;** Y02E 60/10

(86) International application number:
**PCT/CN2020/140342**

(87) International publication number:
**WO 2022/140964 (07.07.2022 Gazette 2022/27)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Ningde Amperex Technology Limited
Ningde, Fujian 352100 (CN)**

(72) Inventors:
• JIANG, Daoyi
  **Ningde, Fujian 352100 (CN)**
• CHEN, Zhihuan
  **Ningde, Fujian 352100 (CN)**

(74) Representative: **Icosa
83 avenue Denfert-Rochereau
75014 Paris (FR)**

(54) **NEGATIVE ELECTRODE MATERIAL, ELECTRODE PLATE COMPRISING THE NEGATIVE ELECTRODE MATERIAL, AND ELECTROCHEMICAL DEVICE**

(57) This application provides a negative electrode material, an electrode plate containing such negative electrode material, and an electrochemical apparatus. The negative electrode material includes silicon monoxide particles. A molar ratio A of oxygen to silicon on a surface of the silicon monoxide particle is greater than a molar ratio B of oxygen to silicon inside the silicon monoxide particle, so that the molar ratio A of oxygen to silicon on the surface of the silicon monoxide particle and a molar ratio B of oxygen to silicon at any point above 25 nm from the surface of the silicon monoxide particle satisfy A/B > 1.5, allowing the electrochemical apparatus to have a smaller volume swelling and better cycling performance during charge and discharge cycles.

FIG. 1

**EP 4 270 540 A1**

**Description**

**TECHNICAL FIELD**

This application relates to the electrochemical field, and specifically, to a negative electrode material, an electrode plate containing such negative electrode material, and an electrochemical apparatus.

**BACKGROUND**

Lithium-ion batteries have been widely used in the field of consumer electronics by virtue of their characteristics such as high specific energy, high working voltage, low self-discharge rate, small size, and light weight. With the rapid development of electric vehicles and mobile electronic devices, people have increasingly high requirements for energy density and cycling performance of lithium-ion batteries. With a gram capacity of up to 1500 mAh/g to 2000 mAh/g, silicon-based negative electrode materials are considered to be the most promising next-generation lithium-ion negative electrode materials.

However, silicon-based negative electrode materials have the problems such as low conductivity and large volume swelling changes during charging and discharging, which hinder further application of the silicon-based negative electrode materials in lithium-ion batteries. Therefore, there is an urgent need for a silicon-based negative electrode material that can further improve cycling stability of lithium-ion batteries and reduce volume swelling of lithium-ion batteries.

**SUMMARY**

This application is intended to provide a negative electrode material, an electrode plate containing such negative electrode material, and an electrochemical apparatus, so as to reduce volume swelling of the electrochemical apparatus and improve cycling performance of the electrochemical apparatus.

It should be noted that in the following content of this application, an example in which a lithium-ion battery is used as an electrochemical apparatus is used to illustrate this application. However, the electrochemical apparatus of this application is not limited to the lithium-ion battery.

Specific technical solutions are as follows:

A first aspect of this application provides a negative electrode material including silicon monoxide particles, where a molar ratio A of oxygen to silicon on a surface of the silicon monoxide particle is greater than a molar ratio B of oxygen to silicon inside the silicon monoxide particle, such that the molar ratio A of oxygen to silicon on the surface of the silicon monoxide particle and a molar ratio B of oxygen to silicon at any point above 25 nm from the surface of the silicon monoxide particle satisfy A/B > 1.5.

In the negative electrode material of this application, the molar ratio A of oxygen to silicon on the surface of the silicon monoxide particle is greater than the molar ratio B of oxygen to silicon inside the silicon monoxide particle, which indicates that the oxygen content on the surface of the silicon monoxide particle is higher than the oxygen content inside the silicon monoxide particle. The molar ratio A of oxygen to silicon on the surface of the silicon monoxide particle and the molar ratio B of oxygen to silicon at any point above 25 nm from the surface of the silicon monoxide particle satisfy A/B > 1.5, so that the negative electrode material of this application has a low lithiation swelling and enhanced stability. In this application, the molar ratio of oxygen to silicon from the surface to the inside of the silicon monoxide particle gradually decreases in a gradient manner.

In this application, the molar ratio of oxygen to silicon is a ratio of the numbers of atoms in oxygen and silicon in the silicon monoxide particle, that is, the molar ratio between elements oxygen and silicon.

In an implementation of this application, the molar ratio B of oxygen to silicon inside the silicon monoxide particle satisfies $0.5 \leq B \leq 1.5$. Without being limited to any theory, when the molar ratio B of oxygen to silicon inside the silicon monoxide particle satisfies $0.5 \leq B \leq 1.5$, the negative electrode material can have a smaller lithiation swelling, thereby enhancing the stability of the negative electrode material. A lower limit of the molar ratio B of oxygen to silicon inside the silicon monoxide particle may include 0.5, 0.7, 0.8, 0.9, or 1.0, and an upper limit of the molar ratio B of oxygen to silicon inside the silicon monoxide particle may include 1.1, 1.2, 1.3, 1.4, or 1.5.

In an implementation of this application, a conductive material is further present on the surface of the silicon monoxide particle to improve conductivity of the negative electrode material, where thickness of the conductive material is 1 nm to 50 nm. Without being limited to any theory, when the thickness of the conductive material is excessively small, for example, less than 1 nm, it is difficult to effectively improve the conductivity of the negative electrode material; and when the thickness of the conductive material is excessively large, for example, greater than 50 nm, the relative content of an active material in a negative electrode plate is reduced, affecting energy density of the lithium-ion battery. A lower limit of the thickness of the conductive material may include the following values: 1 nm, 5 nm, 10 nm, 20 nm, or 25 nm, and an upper limit of the thickness of the conductive material may include the following values: 30 nm, 35 nm, 40 nm, 45 nm, or 50 nm.

The conductive material is not particularly limited in this application, provided that the conductivity of the negative electrode material can be further improved. For example, the conductive material may include at least one of amorphous carbon, carbon nanotubes, graphene, or vapor-deposited carbon fibers.

In an implementation of this application, based on a total mass of the negative electrode material, a mass percentage of the conductive material is 0.5% to 8%. Without being limited to any theory, when the percentage of the conductive material is excessively low, for example, lower than 0.5%, it is difficult to effectively improve the conductivity of the negative electrode material; and when the percentage of the conductive material is excessively high, for example, higher than 8%, the relative content of the active material in the negative electrode plate is reduced, affecting the energy density of the lithium-ion battery. In this application, a lower limit of the percentage of the conductive material may include the following values: 0.5%, 1%, 2%, 3%, or 4%, and an upper limit of the percentage of the conductive material may include the following values: 5%, 6%, 7%, or 8%.

In an implementation of this application, a polymer is further present on the surface of the silicon monoxide particle. The silicon monoxide particle may have the polymer on at least part of the surface, or may be entirely encapsulated by the polymer. Without being limited to any theory, the polymer itself generally has a good structural stability and can be used as a carrier for the conductive material.

In this application, based on a total mass of the negative electrode material, a mass percentage of the polymer is 1% to 10%. Without being limited to any theory, when the percentage of the polymer is excessively low, for example, lower than 1%, it is difficult to effectively enhance the structural stability of the negative electrode material; and when the percentage of the polymer is excessively high, for example, higher than 10%, the relative content of the active material in the negative electrode plate is reduced, affecting the energy density of the lithium-ion battery. A lower limit of the mass percentage of the polymer may include the following values: 1%, 2%, 3%, or 4%, and an upper limit of the mass percentage of the polymer may include the following values: 5%, 6%, 7%, 8%, or 10%.

The polymer is not particularly limited in this application, provided that the invention objectives of this application can be achieved. In an implementation of this application, the polymer may include at least one of carboxymethyl cellulose, polyacrylic acid, polyvinyl alcohol, polyamide, polyacrylic ester, or derivatives of the foregoing substances. One of these polymers may be used alone, or more than two of them may be used in combination at any ratio.

In an implementation of this application, $D_v50$ of the silicon monoxide particle is 1 $\mu$m to 15 $\mu$m. Without being limited to any theory, controlling $D_v50$ of the silicon monoxide particle within the foregoing range can further enhance the stability of the negative electrode material. $D_v50$ is a particle size where the cumulative distribution by volume reaches 50% as counted from the small particle size side. A lower limit of $D_v50$ of the silicon monoxide particle may include the following values: 1 $\mu$m, 3 $\mu$m, 5 $\mu$m, or 7 $\mu$m, and an upper limit of $D_v50$ of the silicon monoxide particle may include the following values: 9 $\mu$m, 10 $\mu$m, 12 $\mu$m, or 15 $\mu$m.

In an implementation of this application, the negative electrode material may further include amorphous carbon. Specifically, the silicon monoxide particles can be dispersed in a matrix formed by the amorphous carbon to form a silicon monoxide-amorphous carbon composite material, which can further improve the conductivity of the negative electrode material.

In an implementation of this application, $D_v50$ of the negative electrode material is 3 $\mu$m to 15 $\mu$m. Without being limited to any theory, when $D_v50$ of the negative electrode material is excessively small (for example, less than 3 $\mu$m), specific surface areas of small particles are large, so the negative electrode material is more likely to react with an electrolyte to generate more by-products; and when $D_v50$ of the negative electrode material is excessively large (for example, greater than 15 $\mu$m), large particles have large volume changes during cycling, so the negative electrode material is more likely to break, which is not conducive to enhancing the stability of the negative electrode material.

In an implementation of this application, $D_v99$ of the negative electrode material is 10 $\mu$m to 45 $\mu$m, which indicates that particle size distribution of the negative electrode material is uniform, thereby reducing surface roughness of the negative electrode plate and improving the performance of the negative electrode plate. $D_v99$ is a particle size of the negative electrode material where the cumulative distribution by volume reaches 99% as counted from the small particle size side.

In an implementation of this application, $D_v50$ of the silicon monoxide particle in the negative electrode material is 60 nm to 500 nm. In this application, a lower limit of $D_v50$ of the silicon monoxide particle in the negative electrode material may include the following values: 60 nm, 100 nm, 150 nm, 200 nm, or 250 nm, and an upper limit of $D_v50$ of the silicon monoxide particle in the negative electrode material may include the following values: 300 nm, 350 nm, 400 nm, 450 nm, or 500 nm.

In an implementation of this application, a gram capacity of the negative electrode material at 2.0 V is 600 mAh/g to 1400 mAh/g, which indicates that the negative electrode material of this application has a high gram capacity.

In an implementation of this application, based on a total mass of the negative electrode material, a mass percentage of carbon is 5% to 50%. Without being limited to any theory, when the percentage of carbon is excessively low (for example, lower than 5%), it is not conducive to improving the conductivity of the negative electrode material; and when the percentage of carbon is excessively high (for example, higher than 50%), it is not conducive to improving the energy density of the lithium-ion battery. Controlling the percentage of carbon in the negative electrode material of this application within the foregoing range allows the negative electrode material to have a good conductivity and the lithium-ion battery to have a high energy density. In this application, a lower limit of the mass percentage of carbon may include the following values: 5%, 10%, 15%, 20%, or 25%, and an upper limit of the mass percentage of carbon may include the following values: 30%, 35%, 40%, 45%, or 50%.

In an implementation of this application, based on the total mass of the negative electrode material, a mass percentage of silicon is 15% to 38%. Without being limited to any theory, when the percentage of silicon is excessively low (for example, lower than 15%), it is not conducive to improving the energy density of the lithium-ion battery; and when the percentage of silicon is excessively high (for example, higher than 38%), it is not conducive to enhancing the stability of the negative electrode material. Controlling the percentage of silicon in the negative electrode material of this application within the foregoing range allows the negative electrode material to have a good stability and the lithium-ion battery to have a high energy density. In this application, a lower limit of the mass percentage of silicon may include the following values: 15%, 20%, 23%, or 25%, and an upper limit of the mass percentage of silicon may include the following values: 27%, 30%, 35%, or 38%.

A preparation method of the negative electrode material is not particularly limited in this application and can be a preparation method well known to persons skilled in the art. For example, the following preparation methods can be used.

Silicon dioxide and metal silicon powder are mixed at a molar ratio of 1:5 to 5:1 to obtain a mixed material. The mixed material is heated at 1200°C to 1450°C for 0.5 h to 24 h at $10^{-4}$ kPa to $10^{-1}$ kPa to obtain gas. The obtained gas is condensed to obtain a solid, and then the obtained solid is crushed and sieved to obtain silicon monoxide particles with different particle size distributions.

The obtained silicon monoxide particles are placed in an inert atmosphere with an oxygen content of less than 5% by volume fraction, and subjected to heat treatment at 250°C to 700°C for 0.5 h to 12 h to obtain a negative electrode material.

Alternatively, the obtained silicon monoxide particles are placed in a sand mill containing an organic solvent (for example, absolute ethanol) and a dispersant (for example, asphalt) for ball milling for 2 h to 48 h, and the oxide layer on the surface of the silicon monoxide particles is oxidized in the organic solvent or naturally oxidized in the air.

The conductive material may also be present on the surface of the silicon monoxide particle so that a conductive layer is formed. The conductive layer may be formed in the following methods.

The silicon monoxide particles are placed in a chemical vapor deposition (CVD) furnace and deposited at 600°C to 900°C using hydrocarbon gases such as methane, acetylene, and ethylene. The resulting product can be subjected to post-treatments such as grading and demagnetization after deposition.

Alternatively, the silicon monoxide particles, the conductive material, and the dispersant are fully dispersed and stirred in the organic solvent, and then the organic solvent is removed to obtain solid powder, that is, to form a conductive layer on the surface of the silicon monoxide particles. The solid powder can also be subjected to post-treatments such as crushing, sieving, demagnetization, and sintering.

The organic solvent is not particularly limited in this application, for example, the organic solvent may be absolute ethanol, provided that the surface of the silicon monoxide particles can be oxidized to form an oxide layer. An amount of the organic solvent added is not particularly limited, for example, a mass ratio of the organic solvent to the silicon monoxide particles is 1:20 to 1:30.

An amount of the dispersant added is not particularly limited, for example, a mass ratio of the dispersant to the silicon monoxide particles is (0.5 to 3):(97 to 99.5), provided that the silicon monoxide particles can be fully dispersed in the organic solvent.

The inert atmosphere is not particularly limited, for example, the inert atmosphere may be argon or helium.

A second aspect of this application provides a negative electrode plate including the negative electrode material according to any one of the foregoing implementations.

The positive electrode plate of this application is not particularly limited, provided that the objectives of this application can be achieved. For example, the positive electrode plate generally includes a positive electrode current collector and a positive electrode active material layer. The positive electrode current collector is not particularly limited and can be any positive electrode current collector well known in the art, for example, aluminum foil, aluminum alloy foil, or composite current collector. The positive electrode active material layer includes a positive electrode active material, and the positive electrode active material is not particularly limited and can be any positive electrode active material well known in the art, for example, the positive electrode active material may include at least one of lithium nickel cobalt manganate (811, 622, 523, 111), lithium nickel cobalt aluminate, lithium iron phosphate, lithium-rich manganese-based material, lithium cobalt oxide, lithium manganate oxide, lithium manganese iron phosphate, or lithium titanate.

A separator of this application includes but is not limited to at least one of polyethylene, polypropylene, polyethylene terephthalate, polyimide, or aramid. For example, polyethylene includes at least one composition selected from high-density polyethylene, low-density polyethylene, and ultra-high-molecular-weight polyethylene. Particularly, polyethylene and polypropylene can well prevent short circuit, and can enhance stability of the lithium-ion battery through a shutdown effect.

A surface of the separator may further include a porous layer. The porous layer is disposed on at least one surface of the separator and includes inorganic particles and a binder. The inorganic particles are selected from a combination of one or more of aluminum oxide ($Al_2O_3$), silicon oxide ($SiO_2$), magnesium oxide (MgO), titanium oxide ($TiO_2$), hafnium dioxide ($HfO_2$), tin oxide ($SnO_2$), ceria oxide ($CeO_2$), nickel oxide (NiO), zinc oxide (ZnO), calcium oxide (CaO), zirconium oxide ($ZrO_2$), yttrium oxide ($Y_2O_3$), silicon carbide (SiC), boehmite, aluminum hydroxide, magnesium hydroxide, calcium hydroxide, and barium sulfate. The binder is selected from a combination of one or more of polyvinylidene fluoride, vinylidene fluoride-hexafluoropropylene copolymer, polyamide, polyacrylonitrile, polyacrylate ester, polyacrylic acid, polyacrylate salt, sodium carboxymethyl cellulose, polyvinylpyrrolidone, polyvinyl ether, polymethyl methacrylate, polytetrafluoroethylene, and polyhexafluoropropylene.

The porous layer can improve heat resistance, oxidation resistance, and electrolyte infiltration performance of the separator, and enhance bonding between the separator and the positive electrode or the negative electrode.

The lithium-ion battery of this application further includes an electrolyte. The electrolyte may be one or more of a gel electrolyte, a solid electrolyte, and an electrolyte solution. The electrolyte solution includes a lithium salt and a non-aqueous solvent.

In some implementations of this application, the lithium salt is selected from one or more of $LiPF_6$, $LiBF_4$, $LiAsF_6$, $LiClO_4$, $LiB(C_6H_5)_4$, $LiCH_3SO_3$, $LiCF_3SO_3$, $LiN(SO_2CF_3)_2$, $LiC(SO_2CF_3)_3$, $LiSiF_6$, LiBOB, and lithium difluoroborate. For example, $LiPF_6$ may be selected as the lithium salt because it can provide high ionic conductivity and improve cycling characteristics.

The non-aqueous solvent may be a carbonate compound, a carboxylate compound, an ether compound, another organic solvent, or a combination thereof.

The carbonate compound may be a linear carbonate compound, a cyclic carbonate compound, a fluorocarbonate compound, or a combination thereof.

An example of the linear carbonate compound is dimethyl carbonate (DMC), diethyl carbonate (DEC), dipropyl carbonate (DPC), methyl propyl carbonate (MPC), ethyl propyl carbonate (EPC), ethyl methyl carbonate (MEC), or a combination thereof. An example of the cyclic carbonate compound is ethylene carbonate (EC), propylene carbonate (PC), butylene carbonate (BC), vinyl ethylene carbonate (VEC), or a combination thereof. An example of the fluorocarbonate compound is fluoroethylene carbonate (FEC), 1,2-difluoroethylene carbonate, 1,1-difluoroethylene carbonate, 1,1,2-trifluoroethylene carbonate, 1,1,2,2-tetrafluoroethylene carbonate, 1-fluoro-2-methylethylene carbonate, 1-fluoro-1-methylethylene carbonate, 1,2-difluoro-1-methylethylene carbonate, 1,1,2-trifluoro-2-methylethylene carbonate, trifluoromethylethylene carbonate, or a combination thereof.

An example of the carboxylate compound is methyl formate, methyl acetate, ethyl acetate, n-propyl acetate, tert-butyl acetate, methyl propionate, ethyl propionate, propyl propionate, γ-butyrolactone, decanolide, valerolactone, mevalonolactone, caprolactone, or a combination thereof.

An example of the ether compound is dibutyl ether, tetraglyme, diglyme, 1,2-dimethoxyethane, 1,2-diethoxyethane, ethoxymethoxy ethane, 2-methyltetrahydrofuran, tetrahydrofuran, or a combination thereof.

An example of the another organic solvent is dimethyl sulfoxide, 1,2-dioxolane, sulfolane, methyl sulfolane, 1,3-dimethyl-2-imidazolidinone, N-methyl-2-pyrrolidone, formamide, dimethylformamide, acetonitrile, trimethyl phosphate, triethyl phosphate, trioctyl phosphate, phosphate ester, or a combination thereof.

A third aspect of this application provides an electrochemical apparatus including the negative electrode plate according to the second aspect.

A fourth aspect of this application provides an electronic apparatus including the electrochemical apparatus according to the third aspect.

The electronic apparatus of this application is not particularly limited and can be any known electronic apparatus used in the prior art. In some embodiments, the electronic apparatus may include but is not limited to a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notebook, a calculator, a storage card, a portable recorder, a radio, a standby power source, a motor, an automobile, a motorcycle, a motor bicycle, a bicycle, a lighting appliance, a toy, a game console, a clock, an electric tool, a flash lamp, a camera, a large household battery, or a lithium-ion capacitor.

A preparation process of the electrochemical apparatus is well known to persons skilled in the art, and is not particularly limited in this application. For example, the electrochemical apparatus may be manufactured in the following process: a positive electrode and a negative electrode are stacked with a separator therebetween, and are put into a housing after operations such as winding and folding as needed. An electrolyte is injected into the housing and then the housing is sealed. The separator used is the separator provided in this application. In addition, an overcurrent prevention element, a guide plate, and the like may also be placed into the housing as needed, so as to prevent pressure increase, overcharge, and overdischarge inside the electrochemical apparatus.

This application provides a negative electrode material, an electrode plate containing such negative electrode material, and an electrochemical apparatus. The negative electrode material includes silicon monoxide particles, and a molar ratio A of oxygen to silicon on a surface of the silicon monoxide particle is greater than a molar ratio B of oxygen to silicon inside the silicon monoxide particle, enhancing stability of the surface of the negative electrode material. The molar ratio A of oxygen to silicon on the surface of the silicon monoxide particle and a molar ratio B of oxygen to silicon at any point above 25 nm from the surface of the silicon monoxide particle satisfy A/B > 1.5, which can improve ion transmission capability of the negative electrode material while further enhancing the stability of the surface of the negative electrode material, so that the electrochemical apparatus containing such negative electrode material has a smaller volume swelling and better cycling performance during charge and discharge cycles.

## BRIEF DESCRIPTION OF DRAWINGS

To describe the technical solutions in this application and the prior art more clearly, the following briefly describes the accompanying drawings required for describing embodiments and the prior art. Apparently, the accompanying drawings in the following description show merely some embodiments of this application.

FIG. 1 is an element distribution diagram scanned using an FIB-TEM in Example 7 of this application; and
FIG. 2 is an element distribution diagram scanned using an FIB-TEM in Comparative Example 1 of this application.

## DESCRIPTION OF EMBODIMENTS

To make the objectives, technical solutions, and advantages of this application more comprehensible, the following further describes this application in detail with reference to accompanying drawings and embodiments. Apparently, the described embodiments are merely some rather than all of the embodiments of this application. All other technical solutions obtained by persons of ordinary skill in the art based on some embodiments of this application shall fall within the protection scope of this application.

It should be noted that in specific embodiments of this application, an example in which a lithium-ion battery is used as an electrochemical apparatus is used to illustrate this application. However, the electrochemical apparatus of this application is not limited to the lithium-ion battery.

Embodiment

The following describes some embodiments of this application more specifically by using examples and comparative examples. Various tests and evaluations are performed according to the following methods. In addition, unless otherwise specified, "part" and "%" are based on weight.

Test method and device

**Negative electrode material powder property test**

Microscopic morphology observation of negative electrode material powder particles: A scanning electron microscope was used for the microscopic morphology observation of negative electrode material powder. The selected test instrument was OXFORD EDS (X-max-20mm$^2$), with an acceleration voltage of 10 kV. The focus was adjusted, observation magnification was increased from 50K for high magnification observation, and agglomeration of the negative electrode material particles was mainly observed at low magnification of 500 to 2000.

**Specific surface area test of negative electrode material**

At a constant low temperature, the amounts of gas adsorbed by the surface of a solid under different relative pressures were determined, and then an adsorption amount of a monomolecular layer of the sample was found based on the Brunauer-Emmett-Teller adsorption theory and its equation (BET equation), to calculate a specific surface area of the negative electrode material.
The BET equation is:

$$\frac{p}{w(P0-p)} = \frac{1}{WmC} + （c-1）/(WmC) \cdot P/P0$$

W indicates the mass of gas adsorbed by the solid sample at a relative pressure; Wm indicates the amount of gas adsorbed for full monomolecular layer coverage; (c - 1) /(WmC) indicates the slope; and 1/WmC indicates the intercept. Total specific surface area St is: St = (Wm*N*Acs/M), and specific surface area S is: S = St/m, where m indicates the sample mass, and Acs indicates that the average area occupied by each $N_2$ molecule is 16.2 $A^2$.

During testing, 1.5 g to 3.5 g of the negative electrode material powder sample was weighed and put into a test sample tube of a specific surface area and porosity analyzer (model TriStar II 3020), and was degassed at 200°C for 120 min before testing.

**Particle size test of negative electrode material**

0.02 g of the negative electrode material powder sample was added into a 50 ml clean beaker, and 20 ml of deionized water was added, with 3 to 5 drops of surfactant with a mass concentration of 1% added to make the powder sample fully dispersed in the water. Then, the sample was subjected to ultrasonic oscillation for 5 minutes in a 120W ultrasonic cleaning machine, and particle size distribution was tested with a laser particle size analyzer (model MasterSizer 2000).

**Tap density test of negative electrode material**

Refer to the national standard GB/T 5162-2006 Metallic Powders - Determination of Tap Density.

**Carbon percentage test of negative electrode material**

The negative electrode material sample was heated and burned at high temperature in a high-frequency furnace under an oxygen-rich condition to oxidize carbon to carbon dioxide, and the gas was treated, entered a corresponding absorption cell to absorb corresponding infrared radiation, and then was converted into a corresponding signal by a detector. The signal was sampled by using a computer and converted into a value in direct proportional to a concentration of carbon dioxide after linear correction, and then values in an entire analysis procedure were added. After the analysis, a sum was divided by mass and then multiplied by a correction coefficient in the computer; and a blank was deducted to obtain the percentage of carbon in the sample. A high-frequency infrared carbon and sulfur analyzer (model Shanghai Dekai HCS-140) was used for sample testing.

**Surface atomic ratio test of negative electrode material**

On copper foil containing the negative electrode material sprinkled on a conductive adhesive, the cut section was polished using a plasma polisher (Leica EM TIC 3X-Ion Beam Slope Cutter) and then placed into a scanning electron microscope (SEM) to find the cut silicon monoxide particle. A focused ion beam (FIB) was used to cut the foregoing silicon monoxide particle along a direction perpendicular to the section to obtain a slice (about 50 nm) containing the section of the silicon monoxide particle, then a transmission electron microscopy (TEM) was used for measurement, and a random point A' at a distance of 1 nm to 2 nm from the outer surface was taken for an EDS analysis. To be specific, the Si:O atomic ratio on the outer surface of the silicon monoxide particle was A, and extending from the point A' into the silicon monoxide particle along a direction perpendicular to the outer surface, the Si:O atomic ratio at B' at a distance of greater than 25 nm from the outer surface of the point A' was B.

**First-cycle efficiency test of button cell**

The negative electrode material prepared in each example and comparative example was mixed with conductive carbon black and polymer at a ratio of 80:10:10, deionized water was added, and then the mixture was stirred to form a slurry. A 100 μm thick coating was applied on the surface of the current collector using a scraper, dried in a vacuum drying oven at 85°C for 12 hours, and then cut into wafers with a diameter of 1 cm in a dry environment using a punching machine. In a glove box, a button cell was assembled with a lithium metal plate as a counter electrode, a Ceglard composite membrane as a separator, and electrolyte added. A LAND (LAND) series battery tester was used to conduct a charge and discharge test on the button cell. The first-cycle efficiency was calculated as follows: capacity at discharge cut-off voltage of 2.0 V/capacity at charge cut-off voltage of 0.005 V

**Gram capacity calculation manner of button cell**

Gram capacity of button cell at discharge cut-off voltage of 2.0 V.

**Full battery performance test**

**Cycling performance test**

At a test temperature of 25°C or 45°C, the battery was charged to 4.4 V at a constant current of 0.7C, charged to 0.025C at a constant voltage, left standing for 5 minutes, and then discharged to 3.0 V at 0.5C. A capacity obtained in this step was the initial capacity. Then, a 0.7C charge and 0.5C discharge cycling test was performed. A ratio of the capacity of each step to the initial capacity was calculated to obtain a capacity degradation curve. The number of cycles to a capacity retention rate of 90% at 25°C was recorded as cycling performance of a battery under room temperature; and the number of cycles to a capacity retention rate of 80% at 45°C was recorded as cycling performance of the battery under high temperature. The numbers of cycles in the above two cases were compared to compare cycling performance of the material.

**Swelling rate test of lithium-ion battery at full charge**

Thickness of the lithium-ion battery at half charge, that is, in 50% state of charge (SOC), was measured by a spiral micrometer. After 400 cycles, the lithium-ion battery was at full charge, that is, in 100% SOC state, and then thickness of the lithium-ion battery at that time was measured again by the spiral micrometer, and compared with the initial thicknesses of the lithium-ion battery at half charge to obtain a swelling rate of the lithium-ion battery at full charge at that time.

Examples

**Example 1**

**<Preparation of negative electrode material>**

Silicon dioxide and metal silicon powder were mixed at a molar ratio of 1:1 to obtain a mixed material. The mixed material was heated at 1400°C for 10 h at $10^{-4}$ kPa to obtain gas. The obtained gas was condensed to obtain a solid, and then the obtained solid was crushed and sieved to obtain silicon monoxide (SiO) particles with $D_v50$ of 5.2 $\mu$m.

The silicon monoxide particles were placed in argon with an oxygen content of less than 5% by volume fraction, and subjected to heat treatment at 400°C for 10 h to obtain a negative electrode material with a 22 nm thick oxide layer.

**<Preparation of button cell>**

The prepared negative electrode material was mixed with conductive carbon black and a binder polyallyl alcohol (PAA) at a ratio of 80:10:10, deionized water was added, and then the mixture was stirred to form a slurry with a solid content of 40%. A 100 $\mu$m thick coating was applied on the surface of the current collector using a scraper, dried in a vacuum drying oven at 85°C for 12 hours, and then cut into wafers with a diameter of 1 cm in a dry environment using a punching machine. In a glove box, a button cell was assembled with a lithium metal plate as a counter electrode, a Ceglard composite membrane as a separator, and electrolyte added.

**<Preparation of full battery>**

**<Preparation of negative electrode plate>**

Graphite, the prepared negative electrode material, a conductive agent (conductive carbon black), and a binder (PAA) were mixed at a mass ratio of 70:15:5:10, and then deionized water was added as a solvent to obtain a slurry with a solid content of 60%. Then, an appropriate amount of deionized water was added to adjust viscosity of the slurry to 5000 Pa s to obtain a negative electrode slurry. The prepared negative electrode slurry was applied on one surface of an 8 $\mu$m thick copper foil, dried at 110°C, and cold pressed, to obtain a negative electrode plate with a 100 $\mu$m thick coating. Then, the foregoing coating step was repeated on the other surface of the negative electrode plate to obtain the negative electrode plate coated with a negative electrode active substance layer on both surfaces. The negative electrode plate was cut into a size of 74 mm × 867 mm and then welded with tabs for use.

**<Preparation of positive electrode plate>**

A positive electrode active substance lithium cobalt oxide, conductive carbon black, and polyvinylidene fluoride (PVDF) were mixed at a mass ratio of 95:2.5:2.5, then N-methylpyrrolidone (NMP) was added as a solvent to obtain a slurry with a solid content of 75%, and the slurry was stirred to uniformity. The slurry was uniformly applied on one surface of a 12 μm thick aluminum foil, dried at 90°C, and cold pressed, to obtain a positive electrode plate with a 110 μm thick positive electrode active substance layer. Then, the foregoing step was repeated on the other surface of the positive electrode plate to obtain the positive electrode plate coated with a positive electrode active substance layer on both surfaces. The positive electrode plate was cut into a size of 76 mm × 851 mm and then welded with tabs for use.

**<Preparation of separator>**

A 15 μm thick polyethylene (PE) porous polymer film was used as a separator.

**<Preparation of electrolyte>**

In an environment with a water content less than 10 ppm, a non-aqueous organic solvent propylene carbonate (PC), ethylene carbonate (EC), and diethyl carbonate (DEC) were mixed at a mass ratio of 1:1:1, lithium hexafluorophosphate ($LiPF_6$) was added into the non-aqueous organic solvent for dissolving and mixing to uniformity, and then fluoroethylene carbonate (FEC) was added, to obtain an electrolyte. A molar concentration of $LiPF_6$ in the electrolyte was 1.15 mol/L, and a mass concentration of FEC in the electrolyte was 12.5%.

**<Preparation of lithium-ion battery>**

The prepared positive electrode plate, separator, and negative electrode plate were stacked in sequence, so that the separator was sandwiched between the positive electrode plate and the negative electrode plate for separation. Then the resulting stack was wound to obtain an electrode assembly. The electrode assembly was placed into an aluminum-plastic packaging bag and dehydrated at 80°C, and the prepared electrolyte was injected, followed by processes such as vacuum sealing, standing, formation, and shaping, to obtain a lithium-ion battery.

**Example 2**

Example 2 was the same as Example 1 except that in <Preparation of negative electrode material>, the heat treatment time was adjusted to 5 h.

**Example 3**

Example 3 was the same as Example 1 except that in <Preparation of negative electrode material>, the heat treatment time was adjusted to 0.5 h.

**Example 4**

Example 4 was the same as Example 2 except that in <Preparation of negative electrode material>, $D_v50$ of silicon monoxide was 1.3 μm.

**Example 5**

Example 5 was the same as Example 2 except that in <Preparation of negative electrode material>, $D_v50$ of silicon monoxide was 14.6 μm.

**Example 6**

Example 6 was the same as Example 1 except <Preparation of negative electrode material>.

**<Preparation of negative electrode material>**

The silicon monoxide particles obtained in Example 1 were placed in a sand mill containing absolute ethanol and a dispersant asphalt for ball milling for 24 h. $D_v50$ of the silicon monoxide particles was 110 nm, and the surface of the silicon monoxide particles was oxidized in the solution to form a 23 nm thick oxide layer. The obtained mixture was dried to obtain a negative electrode material. A mass ratio of asphalt to the silicon monoxide particles was 1:99, and a mass ratio of absolute ethanol to the silicon monoxide particles was 1:5.

**Example 7**

Example 7 was the same as Example 6 except that in <Preparation of negative electrode material>, $D_v50$ of the silicon monoxide particles was adjusted to 190 nm and the ball milling time was adjusted to 12 h.

**Example 8**

Example 8 was the same as Example 6 except that in <Preparation of negative electrode material>, $D_v50$ of the silicon monoxide particles was adjusted to 520 nm and the ball milling time was adjusted to 8 h.

**Example 9**

Example 9 was the same as Example 6 except that in <Preparation of negative electrode material>, $D_v50$ of the silicon monoxide particles was adjusted to 80 nm and the ball milling time was adjusted to 48 h.

**Example 10**

Example 10 was the same as Example 2 except <Preparation of negative electrode material>.

**<Preparation of negative electrode material>**

The negative electrode material obtained in Example 2 was used as a matrix material, and the matrix material, a conductive material amorphous carbon, and a dispersant carboxymethyl cellulose were dispersed in absolute ethanol at a mass ratio of 96:3.2:0.8. The mixture was stirred to uniformity at room temperature, and then absolute ethanol was removed to obtain a solid. The obtained solid was crushed and sieved to obtain a negative electrode material.

**Example 11**

Example 11 was the same as Example 10 except that in <Preparation of negative electrode material>, the conductive material was carbon nanotubes and the mass ratio of the matrix material, the conductive material, and the dispersant was 96.1:3.1:0.8. A length-diameter ratio of the carbon nanotubes was 3000.

**Example 12**

Example 12 was the same as Example 10 except that in <Preparation of negative electrode material>, the conductive material was graphene and the mass ratio of the matrix material, the conductive material, and the dispersant was 95.2:4.0:0.8.

**Example 13**

Example 13 was the same as Example 10 except that in <Preparation of negative electrode material>, the conductive material was vapor-deposited carbon fibers and the mass ratio of the matrix material, the conductive material, and the dispersant was 91.2:8.0:0.8.

**Example 14**

Example 14 was the same as Example 10 except that in <Preparation of negative electrode material>, the mass ratio of the matrix material, the conductive material, and the dispersant was 98.7:0.5:0.8.

**Example 15**

Example 15 was the same as Example 6 except <Preparation of negative electrode material>.

**<Preparation of negative electrode material>**

The negative electrode material obtained in Example 6 was used as a matrix material, and the matrix material and amorphous carbon were dispersed in absolute ethanol at a mass ratio of 88:12. The mixture was stirred to uniformity at room temperature, and then absolute ethanol was removed to obtain a solid. The obtained solid was crushed and sieved to obtain a negative electrode material.

**Example 16**

Example 16 was the same as Example 15 except that in <Preparation of negative electrode material>, the mass ratio of the matrix material and amorphous carbon was 82:18.

**Example 17**

Example 17 was the same as Example 15 except that in <Preparation of negative electrode material>, the mass ratio of the matrix material and amorphous carbon was 70:30.

**Example 18**

Example 18 was the same as Example 15 except that in <Preparation of negative electrode material>, the mass ratio of the matrix material and amorphous carbon was 55:45.

**Example 19**

Example 19 was the same as Example 1 except <Preparation of negative electrode material>.
The negative electrode material obtained in Example 1 was used as a matrix material, and the matrix material and a polymer carboxymethyl cellulose were dispersed in absolute ethanol at a mass ratio of 99:1. The mixture was stirred to uniformity at room temperature, and then absolute ethanol was removed to obtain a solid. The obtained solid was crushed and sieved to obtain a negative electrode material.

**Example 20**

Example 20 was the same as Example 19 except that in <Preparation of negative electrode material>, the polymer was polyacrylic acid and the mass ratio of the matrix material and the polymer was 95:5.

**Example 21**

Example 21 was the same as Example 19 except that in <Preparation of negative electrode material>, the polymer was polyamide and the mass ratio of the matrix material and the polymer was 90:10.

**Comparative Example 1**

Comparative Example 1 was the same as Example 1 except that in <Preparation of negative electrode material>, SiO was not placed in argon with an oxygen content of less than 5% by volume fraction for heat treatment.

**Comparative Example 2**

Comparative Example 2 was the same as Example 1 except that in <Preparation of negative electrode material>, the treatment temperature and the treatment time were adjusted so that A/B was 1.33.

**Comparative Example 3**

Comparative Example 3 was the same as Example 6 except that in <Preparation of negative electrode material>, SiO was not placed in argon with an oxygen content of less than 5% by volume fraction for heat treatment.

**Comparative Example 4**

Comparative Example 4 was the same as Comparative Example 1 except <Preparation of negative electrode materials

The negative electrode material obtained in Comparative Example 1 was used as a matrix material, and the matrix material, amorphous carbon, and a dispersant carboxymethyl cellulose were dispersed in absolute ethanol at a mass ratio of 96:3.2:0.8. The mixture was stirred to uniformity at room temperature, and then absolute ethanol was removed to obtain a solid. The obtained solid was crushed and sieved to obtain a negative electrode material.

For the preparation parameters and test data of the examples and comparative examples, refer to Tables 1-1, 1-2, 2-1, 2-2, 3-1, 3-2, 4-1, 4-2, 5-1, and 5-2.

**Table 1-1**

| | $D_v50$ of silicon monoxide (μm) | A | B | A/B | Thickness of oxide layer (nm) | Heat treatment temperature (°C) | Heat treatment time (h) | Gram capacity (mAh·g$^{-1}$) | First-cycle efficiency (%) |
|---|---|---|---|---|---|---|---|---|---|
| Example 1 | 5.2 | 6.77 | 0.99 | 6.84 | 22 | 400 | 10 | 1123 | 49 |
| Example 2 | 5.2 | 2.22 | 1.02 | 2.17 | 10 | 400 | 5 | 1432 | 61 |
| Example 3 | 5.2 | 1.69 | 1.07 | 1.58 | 5 | 400 | 0.5 | 1550 | 65 |
| Example 4 | 1.3 | 2.60 | 1.03 | 2.52 | 10 | 400 | 5 | 1405 | 62 |
| Example 5 | 14.6 | 2.50 | 0.98 | 2.55 | 10 | 400 | 5 | 1417 | 63 |
| Comparative Example 1 | 5.2 | 1.08 | 1.05 | 1.03 | / | / | / | 1720 | 71 |
| Comparative Example 2 | 5.2 | 1.30 | 0.98 | 1.33 | 3 | 200 | 1 | 1585 | 67 |

**Table 1-2**

|  | Cycles to 80% at 25°C | Swelling rate of lithium-ion battery in 800th cycle at 25°C (%) | Cycles to 70% at 45°C | Swelling rate of lithium-ion battery in 300th cycle at 45°C (%) |
|---|---|---|---|---|
| Example 1 | 820 | 8.9 | 550 | 6.5 |
| Example 2 | 730 | 9.3 | 540 | 6.7 |
| Example 3 | 680 | 9.8 | 460 | 8.5 |
| Example 4 | 640 | 9.8 | 420 | 8.6 |
| Example 5 | 720 | 9.5 | 480 | 8.7 |
| Comparative Example 1 | 650 | 10.2 | 440 | 8.7 |
| Comparative Example 2 | 670 | 10.0 | 450 | 8.7 |

**Table 2-1**

|  | $D_v50$ of silicon monoxide (nm) | A | B | A/B | Thickness of oxide layer (nm) | Ball milling time (h) | Gram capacity (mAh.g$^{-1}$) | First-cycle efficiency (%) |
|---|---|---|---|---|---|---|---|---|
| Example 6 | 110 | 10.08 | 1.02 | 9.88 | 23 | 24 | 1340 | 57 |
| Example 7 | 190 | 6.53 | 1.04 | 6.28 | 10 | 12 | 1450 | 62 |
| Example 8 | 520 | 3.72 | 1.00 | 3.72 | 6 | 8 | 1580 | 68 |
| Example 9 | 80 | 13.5 | 1.04 | 12.98 | 25 | 48 | 1120 | 54 |
| Comparative Example 3 | 110 | 1.4 | 1.04 | 1.35 | / | / | 1510 | 69 |

**Table 2-2**

|  | Cycles to 80% at 25°C | Swelling rate of lithium-ion battery in 800th cycle at 25°C (%) | Cycles to 70% at 45°C | Swelling rate of lithium-ion battery in 300th cycle at 45°C (%) |
|---|---|---|---|---|
| Example 6 | 630 | 10.5 | 380 | 8.7 |
| Example 7 | 520 | 10.3 | 320 | 9.2 |
| Example 8 | 480 | 9.2 | 250 | 8.9 |
| Example 9 | 530 | 9.0 | 380 | 9.2 |
| Comparative Example 3 | 460 | 10.6 | 350 | 10.2 |

**Table 3-1**

| | $D_v50$ of negative electrode material ($\mu$m) | Type of conductive material | Percentage of conductive material (carbon) (%) | A | B | A/B | Thickness of oxide layer (nm) | Gram capacity (mAh.g$^{-1}$) | First-cycle efficiency (%) |
|---|---|---|---|---|---|---|---|---|---|
| Example 10 | 5.6 | Amorphous carbon | 3.2 | 2.42 | 1.04 | 2.31 | 8 | 1520 | 68 |
| Example 11 | 8.7 | Carbon nanotubes | 3.1 | 2.65 | 1.05 | 2.52 | 8 | 1530 | 67 |
| Example 12 | 10.2 | Graphene | 4.0 | 2.58 | 1.04 | 2.48 | 9 | 1460 | 64 |
| Example 13 | 6.2 | Vapor-deposited carbon fibers | 8.0 | 2.21 | 1.03 | 2.15 | 10 | 1450 | 63 |
| Example 14 | 5.6 | Amorphous carbon | 0.5 | 2.42 | 1.04 | 2.31 | 8 | 1520 | 68 |
| Comparative Example 4 | 5.6 | Amorphous carbon | 3.2 | - | - | - | 7 | 1730 | 78 |

**Table 3-2**

|  | Cycles to 80% at 25°C | Swelling rate of lithium-ion battery in 800th cycle at 25°C (%) | Cycles to 70% at 45°C | Swelling rate of lithium-ion battery in 300th cycle at 45°C (%) |
|---|---|---|---|---|
| Example 10 | 850 | 8.9 | 520 | 8.6 |
| Example 11 | 920 | 8.7 | 550 | 8.4 |
| Example 12 | 830 | 8.9 | 530 | 8.9 |
| Example 13 | 805 | 8.5 | 470 | 8.6 |
| Example 14 | 840 | 8.9 | 510 | 8.5 |
| Comparative Example 4 | 820 | 9.2 | 480 | 8.7 |

**Table 4-1**

|  | $D_v50$ of negative electrode material ($\mu$m) | Percentage of carbon (%) | A | B | A/B | Thickness of oxide layer (nm) | Gram capacity (mAh.g$^{-1}$) | First-cycle efficiency (%) |
|---|---|---|---|---|---|---|---|---|
| Example 15 | 8.4 | 12 | 11.98 | 1.02 | 11.74 | 22 | 1230 | 63 |
| Example 16 | 7.6 | 18 | 10.72 | 1.10 | 9.75 | 21 | 1185 | 65 |
| Example 17 | 8.9 | 30 | 9.88 | 1.21 | 8.165 | 18 | 1060 | 67 |
| Example 18 | 10.3 | 45 | 8.52 | 1.13 | 7.54 | 18 | 870 | 65 |

**Table 4-2**

|  | Cycles to 80% at 25°C | Swelling rate of lithium-ion battery in 800th cycle at 25°C (%) | Cycles to 70% at 45°C | Swelling rate of lithium-ion battery in 300th cycle at 45°C (%) |
|---|---|---|---|---|
| Example 15 | 825 | 9.5 | 500 | 8.9 |
| Example 16 | 860 | 9.3 | 530 | 8.7 |
| Example 17 | 920 | 8.8 | 550 | 8.4 |
| Example 18 | 960 | 8.5 | 580 | 8.1 |

**Table 5-1**

| | $D_v 50$ of negative electrode material ($\mu$m) | Polymer | A | B | A/B | Thickness of oxide layer (nm) | Gram capacity (mAh.g$^{-1}$) | First-cycle efficiency (%) |
|---|---|---|---|---|---|---|---|---|
| Example 19 | 5.5 | Carboxymethyl cellulose | 2.48 | 1.02 | 2.43 | 8 | 1510 | 67 |
| Example 20 | 6.3 | Polyacrylic acid | 2.54 | 1.04 | 2.44 | 7 | 1490 | 68 |
| Example 21 | 7.8 | Polyamide | 2.62 | 1.04 | 2.52 | 9 | 1470 | 66 |

**Table 5-2**

| | Cycles to 80% at 25°C | Swelling rate of lithium-ion battery in 800th cycle at 25°C (%) | Cycles to 70% at 45°C | Swelling rate of lithium-ion battery in 300th cycle at 45°C (%) |
|---|---|---|---|---|
| Example 19 | 840 | 9.2 | 530 | 8.7 |
| Example 20 | 820 | 9.0 | 460 | 8.8 |
| Example 21 | 830 | 9.1 | 480 | 9.0 |

It can be seen from Examples 1, 2, and 3 and Comparative Examples 1 and 2 that when all the silicon monoxide particles are micronscale, as the oxygen content on the surface of the negative electrode material increases, the cycling performance of the lithium-ion battery gradually becomes better and the swelling of the lithium-ion battery gradually decreases. This indicates that the cycling performance and anti-swelling performance of the lithium-ion battery with the negative electrode material of this application are improved.

It can be seen from Examples 4 and 5 that $D_v 50$ of silicon monoxide affects the cycling performance and swelling rate of the lithium-ion battery. Provided that $D_v 50$ of silicon monoxide is within the range of this application, the cycling performance and anti-swelling performance of the lithium-ion battery can be improved.

It can be seen from Examples 6, 7, 8, and 9 and Comparative Example 3 that when all the silicon monoxide particles are nanoscale, the lithium-ion battery with the negative electrode material of this application has improved cycling performance and anti-swelling performance at 25°C and improved anti-swelling performance at 45°C. It can be seen from Examples 6 and 9 and Comparative Example 3 that the lithium-ion battery with the negative electrode material of this application has improved cycling performance at 45°C.

It can be seen from Examples 10, 11, 12, 13, and 14 and Comparative Example 4 that when the negative electrode materials all contain the conductive material, the lithium-ion battery with the negative electrode material of this application has further improved cycling performance and anti-swelling performance.

It can be seen from Examples 15, 16, 17, and 18 and Comparative Examples 1 and 2 that when the negative electrode material is a silicon monoxide-amorphous carbon composite material, the lithium-ion battery of this application has further improved cycling performance and anti-swelling performance at 25°C and improved cycling performance at 45°C. In addition, as the carbon content increases, the cycling performance and anti-swelling performance of the lithium-ion battery tend to increase.

It can be seen from Examples 19, 20, and 21 and Comparative Examples 1 and 2 that when the negative electrode materials all contain the polymer, the lithium-ion battery with the negative electrode material of this application has further improved cycling performance and anti-swelling performance at 25°C and improved cycling performance at 45°C.

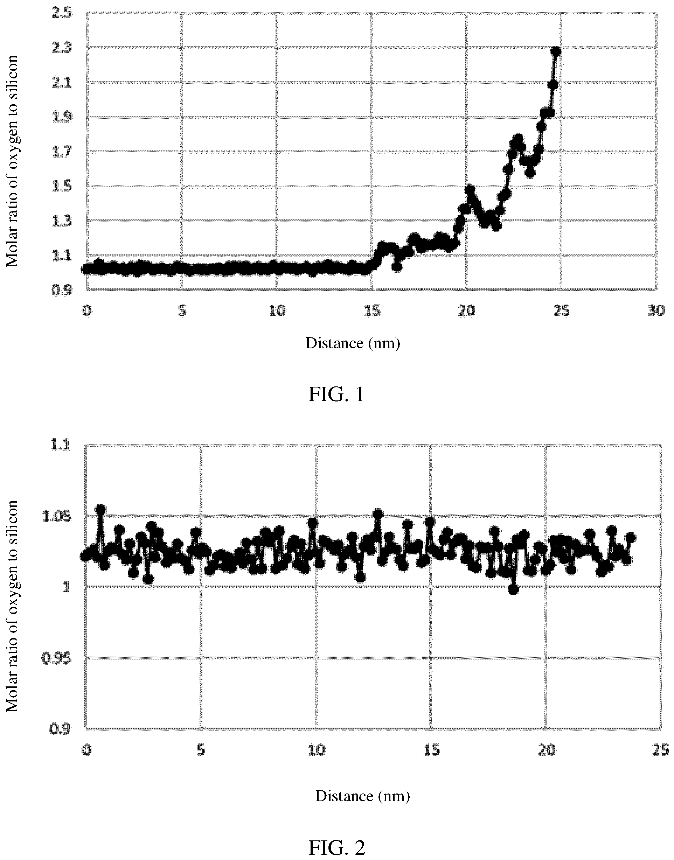

FIG. 1 is a schematic diagram (that is, an element distribution diagram scanned using an FIB-TEM) showing the changes of the molar ratio of oxygen to silicon of the negative electrode material of Example 7 of this application with the extension distance, and specifically, a schematic diagram showing the changes of the measured molar ratio of oxygen to silicon with the extension distance that extends outward from a point inside the negative electrode material at 25 nm from the surface of the negative electrode material. It can be seen from FIG. 1 that the molar ratio of oxygen to silicon from the inside to the surface of the silicon monoxide particle gradually increases in a gradient manner.

FIG. 2 is a schematic diagram (that is, an element distribution diagram scanned using an FIB-TEM) showing the changes of the molar ratio of oxygen to silicon of the negative electrode material of Comparative Example 1 with the extension distance, and specifically, a schematic diagram showing the changes of the measured molar ratio of oxygen to silicon with the extension distance that extends outward from a point inside the negative electrode material at 25 nm from the surface of the negative electrode material. It can be seen from FIG. 2 that distribution of the molar ratio of oxygen to silicon from the inside to the surface of the silicon monoxide particle is irregular.

In conclusion, the lithium-ion battery with the negative electrode material of this application has improved cycling performance and anti-swelling performance.

The foregoing descriptions are merely preferable embodiments of this application, but are not intended to limit this application. Any modification, equivalent replacement, or improvement made without departing from the spirit and principle of this application shall fall within the protection scope of this application.

**Claims**

1. A negative electrode material, comprising silicon monoxide particles, wherein a molar ratio A of oxygen to silicon on a surface of the silicon monoxide particle and a molar ratio B of oxygen to silicon at any point above 25 nm from the surface of the silicon monoxide particle satisfy A/B > 1.5.

2. The negative electrode material according to claim 1, wherein a molar ratio B of oxygen to silicon inside the silicon monoxide particle satisfies $0.5 \leq B \leq 1.5$.

3. The negative electrode material according to claim 1, wherein a conductive material is further present on the surface of the silicon monoxide particle, wherein thickness of the conductive material is 1 nm to 50 nm; the conductive material comprises at least one of amorphous carbon, carbon nanotubes, graphene, or vapor-deposited carbon fibers; and based on a total mass of the negative electrode material, a mass percentage of the conductive material is 0.5% to 8%.

4. The negative electrode material according to claim 1, wherein a polymer is further present on the surface of the silicon monoxide particle, wherein based on a total mass of the negative electrode material, a mass percentage of the polymer is 1% to 10%; and the polymer comprises at least one of carboxymethyl cellulose, polyacrylic acid, polyvinyl alcohol, polyamide, polyacrylic ester, or derivatives of the foregoing substances.

5. The negative electrode material according to claim 1, wherein $D_v50$ of the silicon monoxide particle is 1 $\mu$m to 15 $\mu$m.

6. The negative electrode material according to claim 1, further comprising amorphous carbon.

7. The negative electrode material according to claim 1, wherein the negative electrode material satisfies at least one of the following characteristics:

   (a) $D_v50$ of the negative electrode material is 3 $\mu$m to 15 $\mu$m;
   (b) $D_v99$ of the negative electrode material is 10 $\mu$m to 45 $\mu$m;
   (c) $D_v50$ of the silicon monoxide particle in the negative electrode material is 60 nm to 500 nm;
   (d) a gram capacity of the negative electrode material at 2.0 V is 600 mAh/g to 1400 mAh/g;
   (e) based on a total mass of the negative electrode material, a mass percentage of carbon is 5% to 50%; and
   (f) based on the total mass of the negative electrode material, a mass percentage of silicon is 15% to 38%.

8. A negative electrode plate, comprising the negative electrode material according to any one of claims 1 to 7.

9. An electrochemical apparatus, comprising the negative electrode plate according to claim 8.

10. An electronic apparatus, comprising the electrochemical apparatus according to claim 9.

FIG. 1

FIG. 2

## INTERNATIONAL SEARCH REPORT

| International application No. |
| --- |
| **PCT/CN2020/140342** |

**A.    CLASSIFICATION OF SUBJECT MATTER**

H01M 4/38(2006.01)i;  H01M 4/587(2010.01)i

According to International Patent Classification (IPC) or to both national classification and IPC

**B.    FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNTXT, CNKI, CNABS, DWPI, SIPOABS: 负极, 氧化亚硅, SiO, SiOx, 氧化, 表面, 硅, 摩尔比, silicon, oxide, anode, oxygen, gradient, surface, ratio, atom

**C.    DOCUMENTS CONSIDERED TO BE RELEVANT**

| Category* | Citation of document, with indication, where appropriate, of the relevant passages | Relevant to claim No. |
| --- | --- | --- |
| X | CN 110854368 A (SHAANXI COAL CHEMICAL INDUSTRY TECHNOLOGY INSTITUTE CO., LTD.) 28 February 2020 (2020-02-28) description paragraphs 0007-0059 | 1-3, 5-10 |
| Y | CN 110854368 A (SHAANXI COAL CHEMICAL INDUSTRY TECHNOLOGY INSTITUTE CO., LTD.) 28 February 2020 (2020-02-28) description paragraphs 0007-0059 | 4 |
| Y | CN 111146433 A (NINGDE AMPEREX TECHNOLOGY LTD.) 12 May 2020 (2020-05-12) description paragraphs 0024-0042 | 4 |
| A | CN 103247789 A (SAMSUNG SDI CO., LTD.) 14 August 2013 (2013-08-14) entire document | 1-10 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **22 June 2021** | **21 July 2021** |

| Name and mailing address of the ISA/CN | Authorized officer |
| --- | --- |
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2020/140342**

| Patent document cited in search report | | | Publication date (day/month/year) | Patent family member(s) | | | Publication date (day/month/year) |
|---|---|---|---|---|---|---|---|
| CN | 110854368 | A | 28 February 2020 | None | | | |
| CN | 111146433 | A | 12 May 2020 | None | | | |
| CN | 103247789 | A | 14 August 2013 | EP | 2626932 | B1 | 28 May 2014 |
| | | | | KR | 20130092943 | A | 21 August 2013 |
| | | | | US | 2013209883 | A1 | 15 August 2013 |
| | | | | CN | 103247789 | B | 28 December 2016 |
| | | | | EP | 2626932 | A1 | 14 August 2013 |
| | | | | KR | 101702989 | B1 | 06 February 2017 |
| | | | | US | 9166220 | B2 | 20 October 2015 |
| | | | | JP | 2013165057 | A | 22 August 2013 |

Form PCT/ISA/210 (patent family annex) (January 2015)